# EUROPÄISCHE PATENTSCHRIFT

(11) **EP 1 247 725 B1**
(45) Veröffentlichungstag und Bekanntmachung des Hinweises auf die Patenterteilung: **30.06.2004**
(21) Anmeldenummer: 02005705.5
(22) Anmeldetag: 13.03.2002
(51) Int. Cl.: B62D 25/04

(54) **Tragsäule für einen Karosserierahmen eines Kraftfahrzeugs**
Supporting pillar for a bodywork frame of a motor vehicle
Montant de porte pour un carrosserie d'un véhicule automobile

(30) Priorität: 05.04.2001 DE 10117009
(43) Veröffentlichungstag der Anmeldung: 09.10.2002
(73) Patentinhaber: DaimlerChrysler AG, 70567 Stuttgart (DE); ISE Innomotive Systems Europe GmbH, 51702 Bergneustadt (DE)
(72) Erfinder: Freitag, Elmar, 71263 Weil der Stadt (DE); Glashagel, Mario, 71292 Friolzheim (DE); Holzapfel, Bernhard, 72116 Mössingen (DE); Steffens, Hubertus, 57489 Drolshagen (DE); Voss, Alois, 51702 Bergneustadt (DE)
(74) Vertreter: Bernhard, Uwe

(56) Entgegenhaltungen:
- DE-A- 19 603 098
- PATENT ABSTRACTS OF JAPAN vol. 2000, no. 09, 13. Oktober 2000 (2000-10-13) & JP 2000 177629 A (TOYOTA MOTOR CORP), 27. Juni 2000 (2000-06-27)

## Beschreibung

Die Erfindung betrifft eine Tragsäule für einen Karosserierahmen eines Kraftfahrzeugs, insbesondere eines Personenkraftwagens, mit den Merkmalen des Oberbegriffs des Anspruchs 1. Die Erfindung betrifft außerdem ein Verfahren zum Aufbau oder Zusammenbau einer derartigen Tragsäule.

Eine Tragsäule der eingangs genannten Art ist aus der DE 40 16 730 C2 bekannt und weist einen säulenförmigen Hohlkörper auf, der zwei Profilschalen besitzt, die einen Hohlraum umschließen. In diesem Hohlraum ist ein Rohrkörper angeordnet, der sich in Längsrichtung des Hohlkörpers erstreckt und am Hohlkörper befestigt ist. Bei der bekannten Tragsäule enthält der Hohlkörper zwischen zwei außenliegenden Profilschalen eine Innenschale, deren Kontur an die Form des Rohrkörpers angepaßt ist und an welcher der Rohrkörper befestigt ist, so dass diese Innenschale zur Befestigung des Rohrkörpers im Hohlkörper dient.

Aus der DE 196 03 098 A1 ist eine Fahrgastzelle für einen Personenkraftwagen bekannt, bei der die B-Säulen auf Höhe der Bordkante ohne eine Anbindung nach oben enden. Um die Quersteifigkeit im Hinblick auf Seitenaufprallbelastungen zu erhöhen, ist in jede B-Säule ein zusätzliches Verstärkungsrohr integriert. Die beiden, in die B-Säulen integrierten Verstärkungsrohre sind im Bereich von Längsschwellern und auf Höhe der B-Säulen mit einem sich quer zur Karosseriebreite erstreckenden, an den Karosserieboden angebundenen Versteifungsprofil zu einer querversteifenden Rohrkontruktion starr verbunden. Innerhalb der Längsschweller und innerhalb der B-Säulen sind die Verstärkungsrohre mit Hilfe von Schottblechen in einer definierten Mittellage fixiert. Diese Schottbleche sind einerseits mit dem Außenmantel der Verstärkungsrohre und andererseits mit der Innenwandung des Hohlprofils des jeweiligen Längsschwellers bzw. der jeweiligen B-Säule verschweißt. Zur sicheren Positionierung jedes Verstärkungsrohrs im jeweiligen Längsschweller bzw. in der jeweiligen B-Säule sind über die Länge jedes Verstärkungsrohres mehrere derartiger Schottbleche in Abstand zueinander verteilt angeordnet.

Da der Rohrkörper üblicherweise unabhängig von der Zwischenschale hergestellt wird, kommt es aufgrund von Herstellungstoleranzen zwangsläufig zu Lagetoleranzen, so dass die aneinander zu befestigenden Formen nur im Ausnahmefall spannungsfrei miteinander verbunden werden können. Eine Verbindung unter Spannung herzustellen ist jedoch relativ schwierig und nur mit einem relativ hohen apparativen Aufwand realisierbar.

Des weiteren ist der Zusammenbau der bekannten Tragsäule sehr aufwendig, da die mit dem Rohrkörper verschweißte Innenschale in die Außenschalen eingebaut werden muß.

Wenn eine derartige Tragsäule im Bereich einer Rückenlehne eines Fahrer- oder Beifahrersitzes angeordnet ist (sogenannte "B-Säule"), wird bei modernen Kraftfahrzeugen ein besonders hoher Seitenaufprallschutz gefordert, um bei einem Seitenaufprall eine ungestörte Entfaltung eines sich zwischen Rückenlehne und Tragsäule entfaltenden Seitenaufprallairbags gewährleisten zu können. Darüber hinaus besteht der Wunsch, die jeweilige Tragsäule möglichst stark gegenüber einer vertikalen Achse zu neigen, um dadurch das Fahrzeug flacher ausbilden zu können.

Die vorliegende Erfindung beschäftigt sich mit dem Problem, für eine Tragsäule der eingangs genannten Art eine Ausführungsform anzugeben, die spannungsfrei gefügt bzw. zusammengebaut werden kann. Außerdem soll die Tragsäule einen erhöhten Seitenaufprallschutz gewährleisten.

Dieses Problem wird erfindungsgemäß durch eine Tragsäule mit den Merkmalen des Anspruchs 1 gelöst. Der Rohrkörper wird zu seiner Befestigung zunächst in die Aufnahmeöffnungen der Konsolenwände eingesteckt und kann darin zumindest axial zu sich selbst solange verstellt werden, bis 'er oberhalb dieser Konsole entlang der geradlinigen Linie an der jeweiligen Profilschale anliegt. Die nachfolgenden Befestigungen zwischen Rohrkörper und Konsole einerseits und zwischen Rohrkörper und Profilschale andererseits können dann jeweils spannungsfrei ausgebildet werden. Die erfindungsgemäße Gestaltung ermöglicht somit einen Toleranzausgleich und vereinfacht die Herstellung der Tragsäule.

Ein weiteres wichtiges Merkmal der erfindungsgemäßen Tragsäule wird darin gesehen, dass die Wände, in deren Aufnahmeöffnungen der untere Abschnitt des Rohrkörpers eingesteckt wird, im wesentlichen senkrecht zur Rohrlängsrichtung verlaufen. Durch diese Bauweise stehen diese Wände bei einem Seitenaufprall im wesentlichen parallel zu den auf den Rohrkörper einwirkenden Kräften, wodurch über diese Wände besonders hohe Abstützkräfte übertragen werden können. Da außerdem die beiden Wände, an denen der Rohrkörper befestigt ist, voneinander beabstandet sind, können über die Konsole zusätzlich Momente abgestützt werden, die beim Seitenaufprall auf den Rohrkörper einwirken und diesen z.B. um eine Fahrzeuglängsachse zu drehen suchen. Insgesamt ergibt sich für die Tragsäule durch ihre erfindungsgemäße Ausgestaltung, insbesondere durch deren Anbindung im Bereich der Konsole, eine besonders hohe Formstabilität beim Seitenaufprall. Dementsprechend kann die erfindungsgemäße Tragsäule bei einer Verwendung als B-Säule hinreichend lange einen ausreichenden Abstand zwischen B-Säule und Rückenlehne gewährleisten, um ein Entfalten eines Seitenaufprallairbags sicherzustellen.

Die erfindungsgemäße Tragsäule besitzt im Hinblick auf die Qualitätssicherung zusätzliche Vorteile, da geradlinige Konturen besonders einfach kontrollierbar sind, indem beispielsweise ein entsprechendes Lineal angesetzt wird. Ebenso einfach können vorbestimmte Neigungen derartiger geradliniger Konturen durch entsprechende Winkelmeßgeräte einfach nachgeprüft werden.

Bei einer bevorzugten Ausführungsform kann der Durchmesser von wenigstens einer der Aufnahmeöffnungen größer sein als der Außendurchmesser des darin eingesteckten Rohrkörpers, wobei auf den Rohrkörper eine Verbindungsscheibe aufgesteckt ist, deren Innendurchmesser etwa dem Außendurchmesser des Rohrkörpers entspricht und deren Außendurchmesser größer ist als der Durchmesser der Aufnahmeöffnung, wobei die Verbindungsscheibe einerseits am Rohrkörper und andererseits an der Konsole befestigt ist. Durch diese Bauweise kann auch im Bereich der jeweiligen Aufnahmeöffnung ein Toleranzausgleich erfolgen, wobei der Rohrkörper indirekt über die jeweilige Verbindungsscheibe an der Konsole befestigt ist. Bei dieser Bauweise können auch Formtoleranzen ausgeglichen werden, die bei der Herstellung des Knicks des Rohrkörpers auftreten.

Vorzugsweise ist die Konsole als Faltkörper ausgebildet, der großflächig an der Profilschale anliegt und an dieser befestigt ist. Diese Merkmale ermöglichen eine einfache Herstellung der Konsole und gewährleistet gleichzeitig die Übertragung relativ großer Kräfte.

Zweckmäßig ist eine Ausführungsform, bei der die Konsole im Bereich eines Türscharniers angeordnet ist und mit einem Beschlagelement des Türscharniers verbunden ist. Durch die Verbindung mit dem Beschlagelement wird die Stabilität der Konsole zusätzlich erhöht, wodurch die Kraftübertragung zwischen Rohrkörper und Karosserierahmen im Crashfall verbessert ist. Gleichzeitig wird dadurch die Stabilität der Türlagerung verbessert.

Bei einer vorteilhaften Ausführungsform kann der Rohrkörper in einem dem Fahrzeugdach zugeordneten oberen Bereich entlang einer geradlinigen ersten Linie an der einen Profilschale anliegen und daran befestigt sein, wobei der Rohrkörper in einem zwischen dem oberen Bereich und dem unteren Bereich liegenden mittleren Bereich entlang einer geradlinigen zweiten Linie an der einen Profilschale.anliegt und daran befestigt ist, wobei die erste Linie geneigt zur zweiten Linie verläuft und wobei der Rohrkörper zwischen seinem oberen Bereich und seinem mittleren Bereich einen zweiten Knick aufweist. Durch diese Maßnahme kann die Tragsäule eine besonders große Neigung gegenüber einer vertikalen Achse aufweisen und trotzdem über die gewünschten Stabilitätseigenschaften verfügen.

Bei einer besonderen Weiterbildung dieser Ausführungsform kann der Rohrkörper aus zwei Rohren bestehen, die im mittleren Bereich ineinandergesteckt und aneinander befestigt sind, wobei jedes Rohr einen Knick aufweist. Durch diese Bauweise können Lagetoleranzen, die bei der Ausbildung der beiden Knicke und bei der Herstellung der entsprechenden Profilschale berücksichtigt werden müssen, ausgeglichen werden, indem die beiden Rohre entsprechend gegeneinander verschoben werden. Dementsprechend kann auch hier ein spannungsfreies Fügen gewährleistet werden.

Um besonders hohe Stabilitätswerte für die Tragsäule erzielen zu können, werden für die Herstellung des Rohrkörpers Rohre aus einem hochfesten Werkstoff verwendet, die einen konstanten Querschnitt aufweisen. Hochfeste Rohre dieser Art sind relativ einfach herstellbar, wodurch die erfindungsgemäße Tragsäule relativ preiswert ist.

Zweckmäßigerweise liegt der Rohrkörper entlang der jeweiligen Linie punktförmig an der jeweiligen Profilschale an und ist dementsprechend auch punktförmig an dieser befestigt. Diese Maßnahme erleichtert eine selbsttätig ablaufende Herstellung, insbesondere mit Schweißapparaten oder Schweißrobotern.

Das der Erfindung zugrundeliegende Problem wird auch durch ein Verfahren mit den Merkmalen des Anspruchs 12 sowie durch eine Konsole mit den Merkmalen des Anspruchs 19 gelöst.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert.

Es zeigen, jeweils schematisch,
- Fig. 1: einen Querschnitt durch eine erfindungsgemäße Tragsäule,
- Fig. 2: eine teilweise geschnittene Seitenansicht auf einen Bereich einer erfindungsgemäßen Tragsäule,
- Fig. 3: eine Ansicht entsprechend einem Pfeil III in Fig. 2 bei weggelassener Innenschale auf einen Ausschnitt der Tragsäule und
- Fig. 4: eine perspektivische Ansicht auf eine Konsole der Tragsäule.

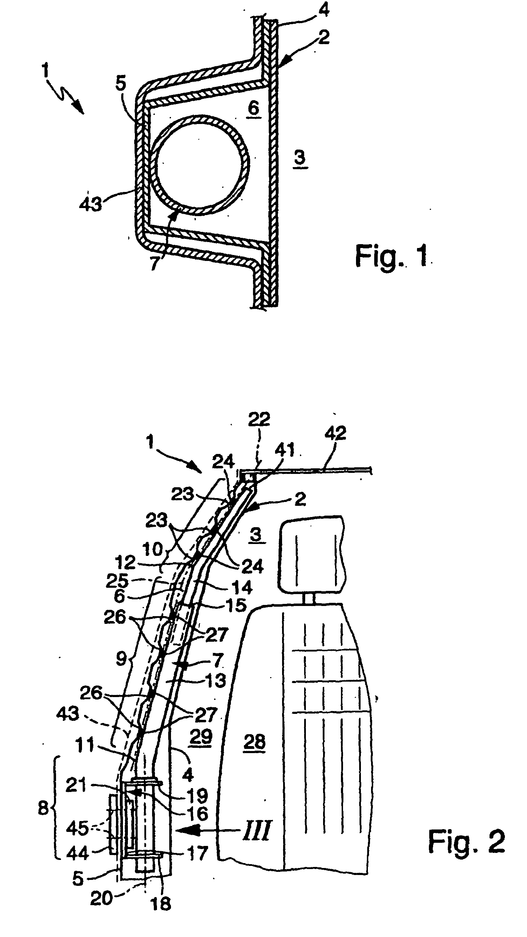

Entsprechend Fig. 1 weist eine erfindungsgemäße Tragsäule 1 eines im übrigen nicht gezeigten Karosserierahmens eines Kraftfahrzeugs, insbesondere eines Personenkraftwagens, einen säulenförmigen Hohlkörper 2 auf, der zwei Profilschalen besitzt, nämlich eine einem Fahrzeuginnenraum 3 zugewandte Innenschale 4 und eine vom Fahrzeuginnenraum 3 abgewandte Außenschale 5. Die Außenschale 5 ist U-förmig oder C-förmig ausgebildet, während die Innenschale 4 als'Deckel wirkt. Grundsätzlich kommt die Erfindung auch ohne Innenschale 4 aus, so dass der Hohlkörper 2 auch ein offenes Profil aufweisen kann. Die beiden Profilschalen 4 und 5 umschließen einen Hohlraum 6, in dem ein Rohrkörper 7 angeordnet ist. Dieser Rohrkörper 7 erstreckt sich dabei im wesentlichen in Längsrichtung des Hohlkörpers 2 und ist an diesem bzw. an dessen Außenschale 5 befestigt. Die Tragsäule 1 ist hier in eine Außenhaut 43 einer im übrigen nicht dargestellten Fahrzeugkarosserie eingesetzt.

Entsprechend Fig. 2 läßt sich der Rohrkörper 7 bei der hier dargestellten Ausführungsform,in drei Bereiche unterteilen, nämlich einen unteren Bereich 8, einen mittleren Bereich 9 und einen oberen Bereich 10. Die einzelnen Bereiche 8 bis 10 sind dabei durch geschweifte Klammern gekennzeichnet. Beim Übergang zwischen zwei benachbarten Bereichen 8 bis 10 besitzt der Rohkörper 7 jeweils einen Knick, nämlich einen ersten Knick 11 zwischen dem unteren Bereich 8 und dem mittleren Bereich 9 sowie einen zweiten Knick 12 zwischen dem mittleren Bereich 9 und dem oberen Bereich 10. Ein vom unteren Bereich 8 abgewandtes Ende 41 des Rohrkörpers 7 endet im Bereich eines Fahrzeugdachs 42. Der Rohrkörper 7 ist hier durch zwei Rohre 13 und 14 gebildet, die im mittleren Bereich 9 ineinandergesteckt und durch Schweißverbindungen 15 aneinander befestigt sind. Dementsprechend ist der erste Knick 11 an dem einen, ersten Rohr 13 und der zweite Knick 12 an dem anderen, zweiten Rohr 14 ausgebildet.

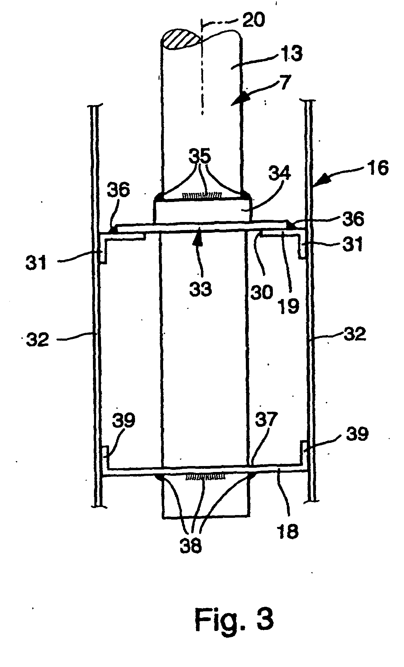

Im unteren Bereich 8 ist der Rohrkörper 7 an einer Konsole 16 befestigt, die ihrerseits an der Außenschale 5 befestigt ist. Die Konsole 16 weist eine Basisplatte 17 auf, von der eine untere Wand 18 sowie eine obere Wand 19 ausgehen. Die beiden Wände 18 und 19 sind voneinander beabstandet und erstrecken sich dabei im wesentlichen quer zu einer Rohrlängsrichtung 20, die das erste Rohr 13 im unteren Bereich 8 aufweist. Das untere, erste Rohr 13 durchdringt dabei die beiden Wände 18,19; die Anbindung des Rohrkörpers 7 an die Konsole 16 ist weiter unten in Verbindung mit Fig. 3 näher beschrieben.

Die Konsole 16 weist hier an der Innenseite ihrer Basisplatte 17 ein Beschlagelement 21 auf, das z.B. als Gewindeplatte ausgebildet ist und mehrere Gewindeöffnungen aufweist. An diesem Beschlagelement 21 kann ein Bestandteil 44 eines im übrigen nicht gezeigten Türscharniers befestigt sein, z.B. durch Verschraubungen 45. Dieses Beschlagelement 21 verstärkt somit die Basisplatte 17. In der Außenschale 5 und in der mit unterbrochenen Linie gezeigten Außenhaut 43 sind im Bereich des Beschlagelements 21 bzw. des Scharnierbestandteils 44 zweckmäßig eine nicht gezeigte entsprechende Aussparung vorgesehen, um das Beschlagelement 21 mit dem Scharnierbestandteil 44 zu verbinden. Durch den Anbau des Scharnierbestandteils 44 an die Konsole 16 ergibt sich einerseits eine extreme Versteifung der Konsole 16 und andererseits eine stabile Verankerung für das Türscharnier. Bei einem Seitenaufprall gegen die Seitentür werden die Kräfte somit über den Scharnierbestandteil 44 direkt an dieser hochsteifen Konsole 16 in die Tragsäule 1 eingeleitet, wodurch schon bereits bei einer relativ geringen Eindringtiefe der Eindringwiderstand stark ansteigt.

Im oberen Bereich 10 liegt das obere, zweite Rohr 14 entlang einer geradlinigen ersten Linie 22 an der Außenschale 5 an. Dabei besitzt die Außenschale 5 im oberen Bereich 10 mehrere Kontaktzonen 23, in denen die Außenschale 5 am oberen, zweiten Rohr 14 zur Anlage kommt. Innerhalb dieser Kontaktzonen 23 ist das obere, zweite Rohr 14 an der Außenschale 5, insbesondere mittels Schweißpunkten 24, befestigt.

Im mittleren Bereich 9 kommt das untere, erste Rohr 13 entlang einer geradlinigen zweiten Linie 25 an der Außenschale 5 zur Anlage. Auch hier weist die Außenschale 5 Kontaktzonen 26 auf, in denen die Außenschale 5 das erste Rohr 13 im wesentlichen punktförmig berührt. Innerhalb dieser Kontaktzonen 26 sind auch hier, insbesondere punktförmige, Schweißverbindungen 27 vorgesehen, mit denen das erste Rohr 13 an der Außenschale 5 befestigt ist. Sowohl die erste Linie 22 als auch die zweite Linie 25 verlaufen geneigt gegenüber einer Geraden, die im wesentlichen senkrecht auf den Wänden 18,19 der Konsole 16 steht und beispielsweise mit der Längsrichtung 20 des Rohrkörpers 7 im unteren Abschnitt 8 zusammenfällt. Des weiteren verlaufen auch die beiden Linien 22 und 25 geneigt zueinander. Durch die so gebildete Raumform ergibt sich für die Tragsäule 1 insgesamt eine recht starke Neigung gegenüber einer vertikalen Achse, wodurch das jeweilige Fahrzeug relativ flach ausgebildet werden kann.

Die erfindungsgemäße Tragsäule 1 weist, wie oben erläutert, eine besonders hohe Formstabilität auf und eignet sich daher in besonderer Weise zur Verwendung als B-Säule, wie dies in Fig. 2 dargestellt ist. Zwischen der Tragsäule 1 und einer Rückenlehne 28 eines Fahrzeugsitzes ist im Fahrzeuginnenraum 3 ein Abstand 29 vorgesehen, in dem sich im Crashfall ein Seitenaufprallairbag entfalten soll. Durch die besonders hohe Steifigkeit der erfindungsgemäßen Tragsäule 1 wird im Crashfall für diesen Seitenaufprallairbag hinreichend lange die Aufrechterhaltung eines ausreichend großen Zwischenraums 29 gewährleistet, so dass die erfindungsgemäße Tragsäule 1 einen entscheidenden Beitrag zur Fahrzeugsicherheit leistet. Durch die hohe Stabilität der Tragsäule 1 wird auch die Sicherheit bei einem Überschlag oder Überrollen des Fahrzeugs erhöht. Des weiteren kann eine durch die Tragsäule 1 gebildete B-Säule eine A-Säule des Rahmens entlasten, so dass diese schlanker und flacher ausgebildet werden kann.

Entsprechend Fig. 3 besitzt die obere Wand 19 der Konsole 16 eine U-förmige Aufnahmeöffnung 30, deren offene Seite in Fig. 3 dem Betrachter zugewandt ist. Der Öffnungsquerschnitt dieser Aufnahmeöffnung 30 ist dabei größer,gewählt als der Außenquerschnitt des darin eingesteckten Rohrkörpers 7 bzw. des unteren, ersten Rohrs 13. Auf diese Weise besitzt der Rohrkörper 7 in der Ebene der oberen Wand 19 ein Spiel, das einen Toleranzausgleich ermöglicht. Die obere Wand 19 ist über abgewinkelte Laschen 31 an Seitenwangen 32 der Konsole 16 befestigt, wobei auch hier gepunktete Schweißverbindungen bevorzugt werden. Auf den unteren Bereich 8 des Rohrkörpers 7 ist eine Verbindungsscheibe 33 aufgesteckt, die einen hülsenartigen Innenkragen 34 aufweist. Der Innendurchmesser der Verbindungsscheibe 33 entspricht im wesentlichen dem Außendurchmesser des Rohrkörpers 7, so dass die Verbindungsscheibe 33 mit relativ wenig Spiel in der Rohrlängsrichtung 20 zumindest während der Montage entlang des Rohrkörpers 7 verschiebbar ist. Der Außenquerschnitt der Verbindungsscheibe 33 ist so groß gewählt, dass die Verbindungsscheibe 33 die Aufnahmeöffnung 30 in radialer Richtung überlappen kann. Im montierten Zustand ist die Verbindungsscheibe 33 mit Schweißstellen 35 am Rohrkörper 7 befestigt. Des weiteren ist die Verbindungsscheibe 33 über Schweißstellen 36 mit.der oberen Wand 19 bzw. mit der Konsole 16 fest verbunden.

Grundsätzlich kann im Bereich der unteren Wand 18 dieselbe Anbindung zwischen Konsole 16 und Rohrkörper 7 realisiert werden wie im Bereich der oberen Wand 19, also insbesondere mit einer Verbindungsscheibe 33. Bei der hier gezeigten bevorzugten Ausführungsform besitzt die untere Wand 18 jedoch eine geschlossene Aufnahmeöffnung 37, deren Öffnungsquerschnitt im wesentlichen dem Außenquerschnitt des Rohrkörpers 7 entspricht. Hierbei ist der Rohrkörper 7 direkt über Schweißstellen 38 mit der unteren Wand 18 bzw. der Konsole 16 verbunden, während der Rohrkörper 7 mit der oberen Wand 19 nur indirekt über die Verbindungsscheibe 33 verbunden ist. Auch die untere Wand 18 ist über abgewinkelte Laschen 39 an den Seitenwangen 32 abgestützt und an diesen, vorzugsweise durch Schweißpunkte, fixiert.

Durch die abgewinkelten und an den Seitenwangen 32 befestigten Laschen 31,39 werden die Wände 18 und 19 quer zur Rohrlängsrichtung 20 intensiv gegen Knicken ausgesteift.

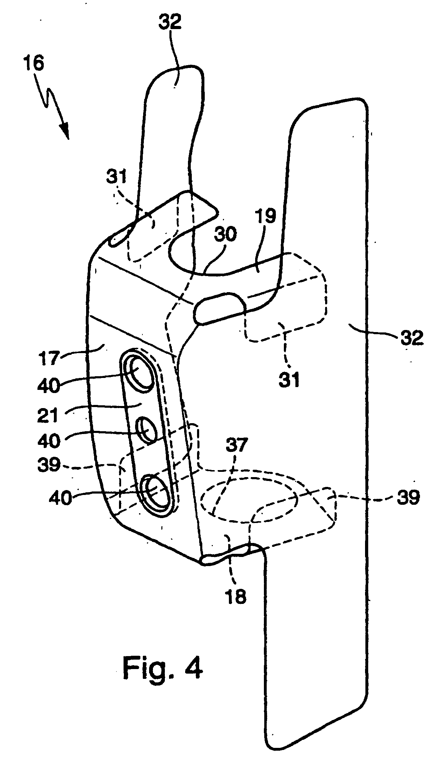

Entsprechend Fig. 4 ist die Konsole 16 vorzugsweise als Faltkörper ausgebildet, der sich aus einem einzigen Blechstück durch entsprechende Umformvorgänge herstellen läßt. Durch geeignete Stanz- und Faltvorgänge werden somit die Seitenwangen 32, die Wände 18,19, deren Aufnahmeöffnungen 30,37 und die Laschen 31,39 gebildet. An der Basisplatte 17 ist das plattenförmige Beschlagelement 21 ausgebildet, das Gewindeöffnungen 40 zum Anschluß des Scharniers aufweist.

Durch die Seitenwangen 32 kann die Konsole 16 großflächig an der Außenschale 5 zur Anlage gebracht werden. Dabei kann zum Ausgleich von Formtoleranzen das Blechmaterial der Konsole 16 relativ einfach nachgeformt werden, damit sich die jeweilige Seitenwange 32 an die Kontur der Außenschale 5 großflächig anschmiegt. Insbesondere durch Schweißpunkte können dann die Seitenwangen 32 fest mit der Außenschale 5 verbunden werden, wodurch die Konsole 16 relativ hohe Kräfte zwischen Rohrkörper 7 und der Tragsäule 1 und somit dem Tragrahmen übertragen kann.

Die hohe Kraft- und Momentübertragung im Bereich der Konsole 16 wird insbesondere dadurch ermöglicht, dass die.Wände 18 und 19 im wesentlichen senkrecht zur Längsrichtung 20 des Rohrkörpers 7 verlaufen. Durch diese Anordnung erstrecken sich die Wände 18 und 19 somit im wesentlichen parallel zu Kräften, die vom Rohrkörper 7 im Crashfall auf die Konsole 16 übertragen werden. In dieser Kraftrichtung besitzen die Wände 18 und 19 jedoch ihre höchste Stabilität, wodurch sich für die gesamte Tragsäule 1, insbesondere bei einem Seitenaufprall, eine besonders hohe Formstabilität ergibt. Die beiden Wände 18,19 sind in der Rohrlängsrichtung 20 voneinander beabstandet, um dadurch auch Momente aufnehmen zu können, die in den Rohrkörper 7 eingeleitet werden. Es ist klar, dass es für die Funktion dieser Konsole 16 nicht darauf ankommt, dass der Rohrkörper 7 einen oder mehrere Knicke 11,12 aufweist. Die Konsole 16 ist auch mit geradlinigen oder gekrümmten Rohrkörpern 7 verwendbar.

Der Zusammenbau oder Aufbau der erfindungsgemäßen Tragsäule 1 erfolgt vorzugsweise wie folgt:

Zunächst wird das erste Rohr 13 hergestellt und mit dem ersten Knick 11 versehen. Ebenso wird das zweite Rohr 14 hergestellt und mit dem zweiten Knick 12 versehen. Anschließend werden die beiden Rohre 13,14 ineinandergesteckt. Die Länge des mittleren Bereichs 9 ist dann durch Relativverschiebungen der beiden Rohre 13,14 ineinander einstellbar. Parallel dazu kann die Außenschale 5 hergestellt und mit der separat hergestellten Konsole 16 ausgestattet werden.

In einem nachfolgenden Schritt wird der durch die beiden, ineinandergesteckten Rohre 13,14 gebildete Rohrkörper 7 in die Außenschale 5 eingesetzt, wobei der untere Bereich 8 des Rohrkörpers 7 in die Aufnahmeöffnungen 30 und 37 der Konsolenwände 18,19 eindringt.

Nach dem Einstecken erfolgt ein Ausrichten des Rohrkörpers 7, solange, bis der Rohrkörper 7 im mittleren Bereich 9 entlang der zweiten Linie 25 an der Außenschale 5 bzw. an deren Kontaktzonen 26 anliegt. Hierbei werden das untere, erste Rohr 13 entlang der zweiten Linie 25 axial verstellt und/oder innerhalb der Aufnahmeöffnungen 30,37 koaxial zur Rohrlängsrichtung 20 verschoben. Des weiteren wird das obere, zweite Rohr 14 solange relativ zum unteren, ersten Rohr 13 verstellt, bis der Rohrkörper 7 auch im oberen Bereich 10 entlang der ersten Linie 22 an der Außenschale 5 bzw. an deren Kontaktzonen 23 anliegt. Dabei wird der Abstand zwischen zweitem Rohr 14 und erster Linie 22 durch axiales Verschieben des zweiten Rohrs 14 im ersten Rohr 13 eingestellt. Im Unterschied dazu läßt sich die Neigung des zweiten Rohrs 14 im oberen Bereich 10 durch Drehverstellungen des zweiten Rohrs 14 relativ zum ersten Rohr 13 einstellen, um das zweite Rohr 14 an den Kontaktzonen 23 zur Anlage zu bringen. Die Außenschale 5 ist im oberen Bereich 10 entsprechend dimensioniert, um derartige Drehverstellungen des zweiten Rohrs 14 zu ermöglichen.

Nach diesem Ausrichten des Rohrkörpers 7 erfolgt seine Befestigung, z.B. durch Schweißen, an der Konsole 16 und an der Außenschale 5. In entsprechender Weise werden auch die beiden Rohre 13 und 14 miteinander verbunden, z.B. verschweißt. Alternativ kann das Ausrichten und Fixieren der beiden Rohre 13 und 14 aneinander auch in einer separaten Justiervorrichtung durchgeführt werden, deren Mimik in den für die Ausrichtung erforderlichen Punkten bzw. Stellen identisch mit der Mimik der Außenschale 5 ausgebildet ist. Die beiden Rohre 13 und 14 können somit außerhalb der Außenschale 5 relativ zueinander positioniert und aneinander befestigt werden, um dann als Einheit in die Außenschale 5 eingesetzt zu werden. Diese Vorgehensweise beruht auf der Erkenntnis, dass sich Toleranzen bei der Herstellung,der Außenschale 5 sowie bei der Herstellung der einzelnen Rohre 13,14 im Laufe der Serienproduktion einspielen und innerhalb zusammengehöriger Chargen mehr oder weniger konstant bleiben, so dass die entsprechend angepaßte Justiervorrichtung die Ausrichtung der beiden Rohre 13,14 separat von der Außenschale 5 zuverlässig ermöglicht. Hierdurch kann die Taktgeschwindigkeit bei der serienmäßigen Herstellung der Tragsäule 1 erhöht werden. Des weiteren können in der Justiervorrichtung die Schweißverbindungen zum Fixieren der beiden Rohre 13 und 14 aneinander so angebracht werden, dass sich innerhalb des Rohrkörpers 7 keine Verspannungen ausbilden.

Zweckmäßig ist die Justiervorrichtung so ausgebildet, dass ihre Mimik einstellbar ist, um die Justiervorrichtung an eine neue Charge bzw. an eine neue Toleranzsituation anzupassen.

Sofern die Verbindungsscheibe 33 verwendet wird, wird diese beim Einbringen des Rohrkörpers 7 in die Außenschale 5 auf den unteren Bereich 8 des Rohrkörpers 7 aufgesteckt, so dass diese zum Ausrichten in Rohrlängsrichtung 20 entlang des unteren Rohrbereichs 8 verstellbar ist. Zum Fixieren der aufgefundenen, ausgerichteten Rohrkörperposition wird dann die Verbindungsscheibe 33 einerseits am Rohrkörper 7 und andererseits an der jeweiligen Wand 19 befestigt.

Das Anbringen der Schweißverbindungen 24 und 27 im Bereich der Kontaktzonen 23 und 26 erfolgt vorzugsweise von einer vom Rohrkörper 7 abgewandten Außenseite der Außenschale 5, indem dort die Schweißpunkte angebracht werden. Da die Außenschale 5 aus einem vergleichsweise dünnen Blech besteht, wirkt die Verschweißung durch die Außenschale 5 hindurch und erzeugt an der dem Rohrkörper 7 zugewandten Innenseite die gewünschte Schweißverbindung zwischen Rohrkörper 7 und Außenschale 5. Beim Elektro-Punktschweißen wird zweckmäßig eine erste Schweißelektrode an der Außenseite der Außenschale 5 angesetzt, während eine zweite Schweißelektrode außen am Rohrkörper 7 angesetzt wird. Durch Strombeaufschlagung wird dann in der Kontaktzone zwischen Außenschale 5 und Rohrkörper 7 ohne Schweißzusatz ein Schweißpunkt erzeugt. Nach der Befestigung des Rohrkörpers 7 an der Außenschale 5 kann diese durch das Anbringen und Befestigen der Innenschale 4 verschlossen werden.

Vorzugsweise bildet die komplett montierte bzw. zusammengebaute Tragsäule 1 ein einheitliches Einbauteil, das als vormontierte Einheit im Rahmen einer Endmontage in die Außenhaut 43 der Fahrzeugkarosserie eingesetzt wird.

Die beiden Rohre 13 und 14 weisen jeweils einen konstanten Querschnitt auf, wobei jedoch das obere, zweite Rohr 14 einen kleineren Querschnitt besitzt als das untere, erste Rohr 13. Durch diese Bauform kann die Tragsäule 1 im oberen Bereich 10 insgesamt schlanker ausgestaltet werden.

## Patentansprüche

1. Tragsäule für einen Karosserierahmen eines Kraftfahrzeugs, insbesondere eines Personenkraftwagens,
- mit einem säulenförmigen Hohlkörper (2), der mindestens eine Profilschale (4,5) aufweist, und
- mit einem im Hohlkörper (2) angeordneten, sich im wesentlichen in Längsrichtung des Hohlkörpers (2) erstreckenden und daran befestigten Rohrkörper (7),
**dadurch gekennzeichnet,**
- **dass** der Rohrkörper (7) in einem unteren Bereich (8) in einer, an der Profilschale (5) befestigten Konsole (16) gehaltert ist, die zwei in Rohrlängsrichtung (20) voneinander beabstandete, sich im wesentlichen quer zur Rohrlängsrichtung (20) erstreckende Wände (18,19) aufweist, die jeweils eine Aufnahmeöffnung (30,37) enthalten, in welche der untere Bereich (8) des Rohrkörpers (7) eingesteckt ist, und bei denen der Rohrkörper (7) an der Konsole'(16) befestigt ist,
- **dass** der Rohrkörper (7) zwischen seinem unteren Bereich (8) und einem davon abgewandten, oberen Ende (41) entlang wenigstens einer geradlinigen Linie (22,25) an der Profilschale (5) anliegt und daran befestigt ist,
- **dass** die Linie (22,25) geneigt zu einer Geraden (20) verläuft, die im wesentlichen senkrecht auf den die Aufnahmeöffnungen (30,37) enthaltenden Wänden (18,19) der Konsole (16) steht,
- **dass** der Rohrkörper (7) zwischen seinem unteren Bereich (8) und dem entlang der Linie (22,25) an der Profilschale (5) anliegenden Bereich einen ersten Knick (11) aufweist.

2. Tragsäule nach Anspruch 1,
**dadurch gekennzeichnet,**
**dass** der Querschnitt von wenigstens einer der Aufnahmeöffnungen (30) größer ist als der Außenquerschnitt des darin eingesteckten Rohrkörpers (7), wobei auf den Rohrkörper (7) eine Verbindungsscheibe (33) aufgesteckt ist, deren Innenquerschnitt etwa dem Außenquerschnitt des Rohrkörpers (7) entspricht und deren Außenquerschnitt größer ist als der Querschnitt der Aufnahmeöffnung (30), wobei die Verbindungsscheibe (33) einerseits am Rohrkörper (7) und andererseits an der Konsole (16) befestigt ist.

3. Tragsäule nach Anspruch 1 oder 2,
**dadurch gekennzeichnet,**
**dass** die Konsole (16) als Faltkörper ausgebildet ist, der großflächig an der Profilschale (5) anliegt und an dieser befestigt ist.

4. Tragsäule nach einem der Ansprüche 1 bis 3,
**dadurch gekennzeichnet,**
**dass** die Konsole (16) im Bereich eines Türscharniers angeordnet ist und mit einem Bestandteil (44) des Türscharniers verbunden ist.

5. Tragsäule nach einem der Ansprüche 1 bis 4,
**dadurch gekennzeichnet,**
- **dass** der Rohrkörper (7) in einem oberen Bereich (10) entlang einer geradlinigen ersten Linie (22) an der Profilschale (5) anliegt und daran befestigt ist,
- **dass** der Rohrkörper (7) in einem mittleren Bereich (9) entlang einer geradlinigen zweiten Linie (25) an der Profilschale (5) anliegt und daran befestigt ist,
- **dass** die erste Linie (22) geneigt zur zweiten Linie (25) verläuft,
- **dass** der Rohrkörper (7) zwischen seinem oberen Bereich (10) und seinem mittleren Bereich (9) einen zweiten Knick (12) aufweist.

6. Tragsäule nach Anspruch 5,
**dadurch gekennzeichnet,**
**dass** der Rohrkörper (7) aus zwei Rohren (13,14) besteht, die im mittleren Bereich (9) ineinandergesteckt und aneinander befestigt sind, wobei jedes Rohr (13,14) einen Knick (11,12) aufweist.

7. Tragsäule nach einem der Ansprüche 1 bis 6,
**dadurch gekennzeichnet,**
**dass** der Rohrkörper (7) aus wenigstens einem Rohr (13,14) gebildet ist, das jeweils aus einem hochfesten Werkstoff besteht und einen konstanten Querschnitt aufweist.

8. Tragsäule nach einem der Ansprüche 1 bis 7,
**dadurch gekennzeichnet,**
**dass** der Rohrkörper (7) ausschließlich aus geradlinigen Abschnitten besteht, die jeweils durch ein Rohrende und einen Knick (11,12) oder durch zwei Knicke (11,12) begrenzt sind.

9. Tragsäule nach einem der Ansprüche 1 bis 8,
**dadurch gekennzeichnet,**
**dass** der Hohlkörper (2) zwei Profilschalen (4,5) aufweist, wobei die Profilschalen durch eine dem Fahrzeuginnenraum (3) zugewandte Innenschale (4) und durch eine vom Fahrzeuginnenraum (3) abgewandte Außenschale (5) gebildet sind, wobei die Außenschale (5) ein im wesentlichen U-förmiges oder C-förmiges Profil aufweist, in das der Rohrkörper (7) eingesetzt ist, während die Innenschale (4) den Rohrkörper (2) nach Art eines Deckels verschließt.

10. Tragsäule nach einem der Ansprüche 1 bis 9,
**dadurch gekennzeichnet,**
**dass** der Rohrkörper (7) entlang der jeweiligen Linie (22,25) punktförmig an der Profilschale (5) anliegt und an dieser befestigt ist.

11. Tragsäule nach einem der Ansprüche 1 bis 10,
**dadurch gekennzeichnet,**
**dass** die Tragsäule (1) als komplett montiertes Einbauteil ausgebildet ist, das in eine Außenhaut (43) der Fahrzeugkarosserie einsetzbar ist.

12. Verfahren zum Aufbau einer Tragsäule (1) für einen Karosserierahmen eines Kraftfahrzeugs, insbesondere eines Personenkraftwagens,
mit folgenden Schritten:
A: Herstellen eines mit mindestens einem Knick (11,12) versehenen Rohrkörpers (7) und Herstellen einer Profilschale (5) mit darin befestigter Konsole (16),
B: Einsetzen des Rohrkörpers (7) in die Profilschale (5), wobei ein unterer Bereich (8) des Rohrkörpers (7) in Aufnahmeöffnungen (30,37) der Konsole (16) eindringt, die in Wänden (18,19) der Konsole (16) ausgebildet sind, die in Rohrlängsrichtung (20) voneinander beabstandet sind und sich im wesentlichen quer zur Rohrlängsrichtung (20) erstrecken,
C: Ausrichten des Rohrkörpers (7), bis dieser zwischen seinem unteren Bereich (8) und einem, davon abgewandten oberen Ende (41) entlang wenigstens einer geradlinigen Linie (22,25) an der Profilschale (5) anliegt und bis der untere Bereich (8) des Rohrkörpers (7) so in den Aufnahmeöffnungen (30,37) positioniert ist, dass der Rohrkörper (7) direkt oder indirekt an den Wänden (18,19) befestigbar ist, wobei die Linie (22,25) geneigt zu einer Geraden (20) verläuft, die im wesentlichen senkrecht auf den Wänden (18,19) steht,
D: Befestigen des ausgerichteten Rohrkörpers (7) an der Konsole (16) und an der Profilschale (5).

13. Verfahren nach Anspruch 12,
**dadurch gekennzeichnet,**
- **dass** vor oder in Schritt B mindestens eine Verbindungsscheibe (33) auf den unteren Bereich (8) des Rohrkörpers (7) aufgesteckt wird,
- **dass** in Schritt C die Verbindungsscheibe (33) entlang des Rohrkörpers (7) verstellt wird, bis diese die Wand (19) der zugeordneten Aufnahmeöffnung (30) berührt,
- **dass** in Schritt D die Verbindungsscheibe (33) einerseits am Rohrkörper (7) und andererseits an der Wand (19) befestigt wird.

14. Verfahren nach Anspruch 12 oder 13,
**dadurch gekennzeichnet,**
**dass** der Rohrkörper (7) gemäß Schritt A dadurch hergestellt wird, dass ein erstes Rohr (13) mit dem ersten Knick (11) und ein zweites Rohr (14) mit einem zweiten Knick (12) ineinandergesteckt werden, wobei die Länge eines zwischen dem ersten Knick (11) und dem zweiten Knick (12) gebildeten mittleren Bereichs (9) des Rohrkörpers (7) durch Relativverschiebungen der beiden Rohre (13,14) ineinander verstellbar ist.

15. Verfahren nach Anspruch 14,
**dadurch gekennzeichnet,**
**dass** das Ausrichten gemäß Schritt C so durchgeführt wird, dass ein oberer Bereich (10) des Rohrkörpers (7) entlang einer geradlinigen ersten Linie (22) und der mittlere Bereich (9) des Rohrkörpers (7) entlang einer geradlinigen zweiten Linie (25) an der Profilschale (5) anliegt, wobei die erste Linie (22) geneigt zur zweiten Linie (25) verläuft.

16. Verfahren nach Anspruch 14 oder 15,
**dadurch gekennzeichnet,**
**dass** das Ausrichten der beiden Rohre (13,14) relativ zueinander und das Befestigen der beiden Rohre (13,14) aneinander in einer separaten Justiervorrichtung durchgeführt wird, deren Mimik an die der Profilschale (5) angepaßt ist.

17. Verfahren nach Anspruch 16,
**dadurch gekennzeichnet,**
**dass** die Mimik der Justiervorrichtung einstellbar ist.

18. Verfahren nach einem der Ansprüche 12 bis 17,
**dadurch gekennzeichnet,**
**dass** in Schritt D die Befestigung des Rohrkörpers (7) an der Profilschale (5) dadurch erfolgt, dass an der Profilschale (5) auf einer vom Rohrkörper (7) abgewandten Außenseite mittels eines Elektro-Punktschweißverfahrens mit zwei Schweißelektroden Schweißpunkte gesetzt werden, welche die Profilschale (5) an ihrer am Rohrkörper (7) anliegenden Innenseite mit dem Rohrkörper (7) verschweißen, wobei die eine Schweißelektrode an der Außenseite und die andere Schweißelektrode außen am Rohrkörper (7) angelegt wird.

## Claims

1. A supporting pillar for a body frame of a motor vehicle, in particular a passenger motor vehicle,
- comprising a pillar-shaped hollow body (2) with at least one profile shell (4, 5) and
- comprising a tubular body (7)arranged in the hollow body (2), with said tubular body (7) extending essentially in longitudinal direction of said hollow body (2) and being attached to it,
**characterised in that**
- the tubular body (7) in a lower region (8) is held in a bracket (16) attached to the profile shell (5) said bracket (16) comprising two walls (18, 19) spaced apart from each other in longitudinal direction (20) of the tube, said walls (18, 19) essentially extending transversely to the longitudinal direction (20) of the tube, each wall (18, 19) comprising a receiving aperture (30, 37) into which the lower region (8) of the tubular body (7) has been inserted, with the tubular body (7) being attached at said receiving aperture (30, 37) to said bracket (16);
- the tubular body (7) between its lower region (8) and an upper end (41) facing away from said lower region (8), along at least one straight line (22, 25) rests against the profile shell (5) and is attached to it;
- the line (22, 25) extends so as to be inclined in relation to a straight line (20), said straight line (20) essentially being perpendicular to the walls (18, 19) of the bracket (16) which walls (18, 19) contain the receiving apertures (30, 37); and
- the tubular body (7), between its lower region (8) and the region resting against the profile shell (5) along the line (22, 25), has a first kink (11).

2. The supporting pillar according to claim 1,
**characterised in that**
the cross section of at least one of the receiving apertures (30) exceeds the external cross-section of the tubular body (7) inserted therein, with a connecting disc (33) having been placed onto the tubular body (7) wherein the internal cross-section of said connecting disc (33) approximately corresponds to the external cross-section of the tubular body (7) and with the external cross-section of said connecting disc (33) exceeding the cross section of the receiving aperture (30), wherein the connecting disc (33) is attached to the tubular body (7) as well as to the bracket (16).

3. The supporting pillar according to claim 1 or 2,
**characterised in that**
the bracket (16) is shaped as a folded body which over a large area establishes contact with the profile shell (5) and is attached to said profile shell (5).

4. The supporting pillar according to one of claims 1 to 3,
**characterised in that**
the bracket (16) is arranged in the region of a door hinge and is connected to a component (44) of the door hinge.

5. The supporting pillar according to one of claims 1 to 4,
**characterised in that**
- in an upper region (10) the tubular body (7) rests against the profile shell (5) along a first straight line (22) and is attached to said profile shell (5);
- in a middle region (9) the tubular body (7) rests against the profile shell (5) along a second straight line (25) and is attached to said profile shell (5);
- that the first line (22) extends so as to be inclined in relation to the second line (25); and
- that between its upper region (10) and its middle region (9) the tubular body (7) has a second kink (12).

6. The supporting pillar according to claim 5,
**characterised in that**
the tubular body (7) comprises two tubes (13, 14) which in the middle region (9) are inserted one into the other and are attached to each other, with each tube (13, 14) having a kink (11, 12).

7. The supporting pillar according to one of claims 1 to 6,
**characterised in that**
the tubular body (7) comprises at least one tube (13, 14) each of which is made from a high-strength material with each tube (13, 14) comprising a constant cross-section.

8. The supporting pillar according to one of claims 1 to 7,
**characterised in that**
the tubular body (7) exclusively comprises straight sections each of which is delimited by a tube end and a kink (11, 12) or by two kinks (11, 12).

9. The supporting pillar according to one of claims 1 to 8,
**characterised in that**
the hollow body (2) comprises two profile shells (4, 5) wherein the profile shells are formed by an internal shell (4) facing the vehicle interior (3) and by an external shell (5) facing away from the vehicle interior (3), wherein the external shell (5) comprises an essentially U-shaped or C-shaped profile into which the tubular body (7) is inserted, while the internal shell 4 closes the tubular body (7) in the manner of a cover.

10. The supporting pillar according to one of claims 1 to 9,
**characterised in that**
the tubular body (7) rests along the respective line (22, 25) at points against the profile shell (5) and is attached to it in a punctiform way.

11. The supporting pillar according to one of claims 1 to 10,
**characterised in that**
the supporting pillar (1) is a completely assembled installation component which can be inserted into an outer panel (43) of the vehicle body.

12. A method for construction of a supporting pillar (1) for a body frame of a motor vehicle, in particular a passenger motor vehicle,
comprising the following steps:
A: Manufacture of a tubular body (7) having at least one kink (11, 12) and production of a profile shell (5) with a bracket (16) attached therein;
B: Insertion of the tubular body (7) into the profile shell (5), with the lower region (8) of the tubular body (7) entering the receiving apertures (30, 37) of the bracket (16), said receiving apertures (30, 37) being shaped in the walls (18, 19) of the bracket (16), said receiving apertures (30, 37) being spaced apart from each other in longitudinal direction (20) of the tube and essentially extending transversely to the longitudinal direction (20) of the tube;
C: Alignment of the tubular body (7) until said tubular body (7) between its lower region (8) and an upper end (41) facing away from said lower region (8), along at least one straight line (22, 25) rests against the profile shell (5) and until the lower region (8) of the tubular body (7) is positioned in the receiving apertures (30, 37) so that the tubular body (7) directly or indirectly can be attached to the walls (18, 19) wherein the line (22, 25) extends so as to be inclined to a straight line (20) which essentially extends perpendicularly to the walls (18, 19); and
D: Attachment of the aligned tubular body (7) to the bracket (16) and to the profile shell (5).

13. The method according to claim 12,
**characterised in that**
- before or during step B at least one connecting disc (33) is placed onto the lower region (8) of the tubular body (7);
- in step C the connecting disc (33) is adjusted along the tubular body (7) until said connecting disc (33) touches the wall (19) of the associated receiving aperture (30); and
- in step D the connecting disc (33) is connected to the tubular body (7) as well as to the wall (19).

14. The method according to claim 12 or 13,
**characterised in that**
the tubular body (7) is manufactured according to step A **in that** a first tube (13) with the first kink (11) and a second tube (14) with a second kink (12) are inserted one into the other, with the middle region (9) of the tubular body (7), said middle region (9) being formed between the first kink (11) and the second kink (12), being adjustable in length by means of relative movement of the two tubes (13, 14) one inside the other.

15. The method according to claim 14,
**characterised in that**
alignment according to step C is carried out such that an upper region (10) of the tubular body (7) along a straight first line (22) and the middle region (9) of the tubular body (7) along a second straight line (25) rest against the profile shell (5), with the first line (22) extending so as to be inclined in relation to the second line (25).

16. The method according to claim 14 or 15,
**characterised in that**
alignment of the two tubes (13, 14) relative to each other and attachment of the two tubes (13, 14) to each other is carried out in a separate adjustment device which simulates the profile shell (5).

17. The method according to claim 16,
**characterised in that**
simulation of the adjustment device is adjustable.

18. The method according to one of claims 12 to 17,
**characterised in that**
in step D, attachment of the tubular body (7) to the profile shell (5) takes place **in that** at the profile shell (5) on the outside facing away from the tubular body (7) weld points are placed by means of an electric spot-welding process using two welding electrodes, said weld points welding together the profile shell (5) at its inside contacting the tubular body (7), with one welding electrode being applied on the outside and the other welding electrode being applied on the outside of the tubular body (7).

## Revendications

1. Montant destiné à une structure de carrosserie d'un véhicule, en particulier d'une voiture particulière,
- présentant un corps creux (2) en forme de colonne, qui présente au moins une coque profilée (4, 5), et
- présentant un corps tubulaire (7), disposé dans le corps creux (2), s'étendant substantiellement dans la direction longitudinale du corps creux (2) et fixé dessus,
**caractérisé en ce**
- **que** dans une zone inférieure (8) le corps tubulaire (7) est maintenu dans une console (16) fixée à la coque profilée (5), qui présente deux parois (18, 19) distantes l'une de l'autre dans la direction longitudinale de tube (20) s'étendant substantiellement à la perpendiculaire de la direction longitudinale de tube (20), qui comprennent chacune une ouverture formant logement (30, 37) dans laquelle est enfichée la zone inférieure (8) du corps tubulaire (7), et dans lesquelles le corps tubulaire (7) est fixé à la console (16),
- **que**, entre sa zone inférieure (8) et une extrémité supérieure (41) détournée de celle-ci, le corps tubulaire (7) repose le long d'au moins une ligne droite (22, 25) contre la coque profilée (5), et est fixé dessus,
- **que** la ligne (22, 25) s'étend en oblique par rapport à une droite (20), qui est substantiellement perpendiculaire aux parois (18, 19) contenant les ouvertures formant logements (30, 37) de la console (16),
- **que** le corps tubulaire (7) présente une première déviation (11), entre sa zone inférieure (8) et la zone reposant contre la coque profilée (5) le long de la ligne (22, 25).

2. Montant selon la revendication 1,
**caractérisé en ce**
**que** la section transversale d'au moins l'une des ouvertures formant logements (30) est plus grande que la section transversale extérieure du corps tubulaire (7) inséré dedans, un disque de liaison (33) étant placé sur le corps tubulaire (7), dont la section transversale intérieure correspond sensiblement à la section transversale extérieure du corps tubulaire (7) et dont la section transversale extérieure est plus grande que la section transversale de l'ouverture formant logement (30), le disque de liaison (33) étant fixé d'un côté au corps tubulaire (7) et d'un autre côté à la console (16).

3. Montant selon la revendication 1 ou 2,
**caractérisé en ce**
**que** la console (16) est réalisée en corps plié, qui repose sur une grande surface contre la coque profilée (5) et est fixé à celle-ci.

4. Montant selon l'une des revendications 1 à 3,
**caractérisé en ce**
**que** la console (16) est disposée dans la zone d'une charnière de porte et est reliée à un composant (44) de la charnière de porte.

5. Montant selon l'une des revendications 1 à 4,
**caractérisé en ce**
- **que** dans une zone supérieure (10) le corps tubulaire (7) repose le long d'une première ligne droite (22) contre la coque profilée (5) et est fixé dessus,
- **que** dans une zone médiane (9) le corps tubulaire (7) repose le long d'une seconde ligne droite (25) contre la coque profilée (5) et est fixé dessus,
- **que** la première ligne (22) s'étend en oblique par rapport à la seconde ligne (25),
- **que** le corps tubulaire (7) présente entre sa zone supérieure (10) et sa zone médiane (9) une seconde déviation (12).

6. Montant selon la revendication 5,
**caractérisé en ce**
**que** le corps tubulaire (7) est constitué de deux tubes (13, 14) qui, dans la zone médiane (9), sont insérés l'un dans l'autre et sont fixés l'un à l'autre, chaque tube (13, 14) présentant une déviation (11, 12).

7. Montant selon l'une des revendications 1 à 6,
**caractérisé en ce**
**que** le corps tubulaire (7) est constitué d'au moins un tube (13, 14), qui est respectivement constitué d'un matériau hautement résistant et présente une section transversale constante.

8. Montant selon l'une des revendications 1 à 7,
**caractérisé en ce**
**que** le corps tubulaire (7) est constitué exclusivement de sections rectilignes, qui chacune sont limitées par une extrémité de tube et une déviation (11, 12) ou par deux déviations (11, 12).

9. Montant selon l'une des revendications 1 à 8,
**caractérisé en ce**
**que** le corps creux (2) présente deux coques profilées (4, 5), les coques profilées étant formées par une coque intérieure (4) orientée vers l'habitacle du véhicule et par une coque extérieure (5) détournée de l'habitacle du véhicule, la coque extérieure (5) présentant un profil substantiellement en forme de U ou en forme de C, dans lequel le corps tubulaire (7) est inséré, tandis que la coque intérieure (4) ferme le corps tubulaire (2) à la manière d'un couvercle.

10. Montant selon l'une des revendications 1 à 9,
**caractérisé en ce**
**que** par l'intermédiaire de points le corps tubulaire (7) repose le long de la ligne (22, 25) respective sur la coque profilée (5) et est fixé sur celle-ci.

11. Montant selon l'une des revendications 1 à 10,
**caractérisé en ce**
**que** le montant (1) est réalisé en module complètement monté, qui peut être inséré dans une peau extérieure (43) de la carrosserie de véhicule.

12. Procédé d'assemblage d'un montant (1) destiné à une structure de carrosserie, en particulier à une voiture particulière,
comportant les étapes qui consistent à :
A : fabriquer un corps tubulaire (7) pourvu d'au moins une déviation (11, 12) et fabriquer une coque profilée (5) avec une console (16) fixée dedans,
B : insérer le corps tubulaire(7) dans la coque profilée (5), une zone inférieure du corps tubulaire (7) pénétrant dans des ouvertures formant logements (30, 37) de la console (16), qui sont réalisées dans les parois (18, 19) de la console (16), qui sont distantes l'une de l'autre dans la direction longitudinale de tube (20) et s'étendent substantiellement perpendiculairement à la direction longitudinale de tube (20),
C : ajuster le corps tubulaire (7), jusqu'à ce que celui-ci, entre sa zone inférieure (8) et une extrémité supérieure (41) distante de celle-ci, repose contre la coque profilée, le long d'au moins une ligne droite (22, 25) et jusqu'à ce que la zone inférieure (8) du corps tubulaire (7) soit positionnée dans les ouvertures formant logements (30, 37) de telle façon que le corps tubulaire (7) puisse être fixé directement ou indirectement aux parois (18, 19), la ligne (22, 25) s'étendant en oblique par rapport à une droite (20), qui se situe substantiellement à la perpendiculaire des parois (18, 19),
D : fixer le corps tubulaire (7) ajusté à la console (16) et à la coque profilée (5).

13. Procédé selon la revendication 12,
**caractérisé en ce**
- **qu'**avant ou dans l'étape B, au moins un disque de liaison (33) est enfiché sur la zone inférieure (8) du corps tubulaire (7),
- **que** dans l'étape C, le disque de liaison (33) jusqu'à ce qu'il touche la paroi (19) de l'ouverture formant logement correspondante (30), est déplacé le long du corps tubulaire (7),
- **que** dans l'étape D, le disque de liaison (33) est fixé d'un côté au corps tubulaire (7) et de l'autre côté à la paroi (19).

14. Procédé selon la revendication 12 ou 13,
**caractérisé en ce**
**que** selon l'étape A, le corps tubulaire (7) est fabriqué par le fait qu'un premier tube (13) comportant une première déviation (11) et un seconde tube (14) comportant une seconde déviation (12) sont insérés l'un dans l'autre, la longueur d'une zone médiane (9) du corps tubulaire (7) entre la première déviation (11) et la seconde déviation (7) étant réglable par translations relatives des deux tubes (13, 14) l'un dans l'autre.

15. Procédé selon la revendication 14,
**caractérisé en ce**
**que** l'ajustement selon l'étape C est effectué de telle façon qu'une zone supérieure (10) du corps tubulaire (7) repose le long d'une première ligne (22) droite et la zone médiane (9) du corps tubulaire repose le long d'une seconde ligne (25) droite, contre la coque profilée (5), la première ligne (22) s'étendant en oblique par rapport à la seconde ligne (25).

16. Procédé selon la revendication 14 ou 15,
**caractérisé en ce**
**que** l'ajustement des deux tubes (13, 14) l'un par rapport à l'autre et la fixation des deux tubes (13, 14) l'un à l'autre sont effectués dans un dispositif d'ajustement séparé, dont le profil est adapté à celui de la coque profilé (5).

17. Procédé selon la revendication 16,
**caractérisé en ce**
**que** le profil du dispositif d'ajustement est réglable.

18. Procédé selon la revendication 12 à 17,
**caractérisé en ce**
**que** dans l'étape D, la fixation du corps tubulaire (7) à la coque profilée (5) s'opère par le fait que sur la coque profilée (5) sur un côté extérieur détourné du corps tubulaire (7) sont réalisés au moyen d'un procédé de soudage électrique par points, via deux électrodes de soudage, des points de soudage lesquels soudent la coque profilée (5), sur son côté intérieur reposant contre le corps tubulaire (7), au corps tubulaire (7), une électrode de soudage étant appliquée au côté extérieur et l'autre électrode de soudage extérieurement au corps tubulaire (7).
